# EUROPEAN PATENT SPECIFICATION

(11) **EP 3 676 084 B1**
(45) Date of publication and mention of the grant of the patent: **26.07.2023**
(21) Application number: 18852701.4
(22) Date of filing: 22.08.2018
(51) Int. Cl.: B29C 53/04

(54) **A METHOD OF AND A DEVICE FOR PRODUCING A FIBROUS PANEL-SHAPED BUILDING ELEMENT**
VERFAHREN UND VORRICHTUNG ZUR HERSTELLUNG EINES FASERIGEN PLATTENFÖRMIGEN BAUELEMENTS
PROCÉDÉ ET DISPOSITIF DE PRODUCTION D'UN ÉLÉMENT DE CONSTRUCTION EN FORME DE PANNEAU FIBREUX

(30) Priority: 30.08.2017 SE 1751037
(43) Date of publication of application: 08.07.2020
(73) Proprietor: IKEA Supply AG, 4133 Pratteln (CH)
(72) Inventor: ANDREASSON, Bengt, 423 53 Torslanda (SE)
(74) Representative: Ström & Gulliksson AB
(86) International application number: PCT/SE2018/050845
(87) International publication number: WO 2019/045617

(56) References cited:
- WO-A1-2010/049418
- WO-A1-2010/049418
- WO-A1-2015/087150
- WO-A1-2015/087150
- WO-A1-2017/007406
- KR-A- 20090 033 995
- KR-B1- 101 126 262
- KR-B1- 101 126 262
- US-A- 3 654 053
- US-A- 3 654 053
- US-A1- 2014 291 262
- US-A1- 2014 291 262

## Description

### FIELD OF THE INVENTION

The present invention relates to a method of folding over and pressing a fibrous sheet to produce a panel-shaped building element having two large faces.

It also relates to a device for folding over and pressing a fibrous sheet to produce a panel-shaped building element having two large faces.

### BACKGROUND OF THE INVENTION

In furniture manufacturing, for example, low weight elements are widely used. Such elements usually consist of a hollow body enclosing a lightweight filling material. The hollow body is covered by a thin film, e.g. a foil, for increasing the aesthetic impression as well as for providing a protective coating for the element.

Such low weight elements can be used as building elements, door panels, and a large amount of furniture elements. Especially in case of home interior applications, heavy demands are made on the thin film. Any damage or degeneration will deteriorate the quality of the low weight element. Consequently, pluralities of manufacturing methods for such low weight elements have been presented.

WO 2017/007406 A1 discloses a method of and a device for folding over and pressing a fibrous sheet to produce a panel-shaped building element having two large faces. The device comprises a pressing member that moves in a closed loop around the fibrous sheet to first fold one half of the fibrous sheet over the other half and then press the combined two halves to form the building element.

KR 10-1126262 B1 discloses a method of and a device for folding over a fibrous sheet to produce a panel-shaped building element having two large faces. The fibrous sheet includes a central portion, and on each side of the central portion a narrow first lateral portion separated from the central portion by a first groove, and a wider second lateral portion separated from the narrow first lateral portion by a second groove. The device comprises a support for receiving the fibrous sheet. The support has a central portion for receiving the central portion of the fibrous sheet and on both sides thereof an opening located under the lateral sheet potions and the grooves. Further, under each opening the device has a first pivotal link that is pivotal between a horizontal position under the support and a vertical position, where it projects through the opening and has made a first 90 degree fold in the first groove to place the narrow first lateral sheet portion against a narrow longitudinal side of the central sheet portion. Thereby it also lifts the wider second lateral sheet portion to a horizontal position above the support. Further, under each opening the device also has a second pivotal link. This second link is L-shaped and pivotal to swing the wider second lateral sheet portion around the second groove from the horizontal position and past a vertical position to let the wider second lateral sheet portion fall down onto the central sheet portion and the sheet be folded by gravity. In doing so, the L-shaped link passes over the upper ends of the first links. No pressing is disclosed, and the outer free end of the L-shaped link presses the wider second lateral sheet portion against the central sheet portion at one point only. Another prior art technology is disclosed in WO2010/049418.

To a great extent, the present invention starts out from the teachings of WO 2017/007406 A1 having an international filing date of June 30, 2016, and claiming convention priority from Swedish patent application No. 1550962-3 filed on July 3, 2015.

### SUMMARY OF THE INVENTION

The object of the present invention is to provide a method of and a device for folding over and pressing a fibrous sheet to produce a panel-shaped building element, where the production rate can be increased while maintaining a firm attachment of the components of the building element to one another.

This object is achieved in that the method comprises the steps of:
- providing a fibrous sheet having a width, a length, and a thickness and including a central portion and two lateral portions parallel thereto and adapted to form at least a part of the large faces of the building element, all three portions extending the full length of the sheet, the central portion carrying spacing elements for providing a desired thickness of the building element;
- providing an adhesive for adhering the two lateral portions to the spacing elements;
- providing a first folding mechanism and operating it to fold the two lateral portions of the fibrous sheet upward such that they are in their entirety upturned, preferably at a right angle, relative to the central portion;
- providing a second folding mechanism in the form of a pressing mechanism having two pressing members and operating it to carry out the following steps:
   - i) first folding down an outer part of each of the two upturned lateral portions to place said outer parts of the lateral portions on top of the central portion; and
   - ii) then making the two pressing members move on top of said outer parts of the lateral portions to press them against the spacing elements on the central portion of the fibrous sheet to become adhered thereto and to produce the building element having two main faces interconnected by the spacing elements and the adhesive.

The fibrous sheet preferably has on one side a foil cladding and on the opposite side there are on both sides of a central portion two lengthwise extending parallel grooves of perpendicularly at least partly V-shaped cross-section that are spaced apart from each other a distance equal to an intended thickness of the building element reduced by the double thickness of the cladding forming between them narrow elongate first lateral portion to permit the fibrous sheet to be folded 90 degrees two times to position the wider second lateral portion on top of the central portion. Further, preferably the first elongate portion after those two times of 90 degrees folding forms at least a major portion of a first narrow face of the building element.

By such a method, the fibrous sheet can be folded over swiftly and carefully in a very effective manner to produce the panel-shaped building element. The fact that the pressing member is moved mainly in a horizontal plane and to a minor extent a short vertical distance instead of describing a loop around the fibrous sheet makes it possible to reduce the time necessary for carrying out the steps and thus makes it possible to increase the production rate.

Preferably, the method further comprises providing a table for receiving the fibrous sheet, said table including a central table portion and two lateral table portions parallel thereto and adapted to receive the central portion and two lateral portions, respectively, of the fibrous sheet, a plurality of fingers included in each one of said two lateral table portions, said fingers being included in said folding mechanism and preferably spaced apart from one another and being pivotal between a lying position in plane with the central table portion and an upright position; and pivoting the fingers between the lying position and the upright position to fold two lateral portions of the fibrous sheet upward such that they are upturned relative to the central portion. Preferably, the fingers constitute said two lateral table portions. By folding up the entire lateral sheet portion from a horizontal position to a vertical position instead of folding up just the narrow first lateral sheet portion, the upright wider lateral sheet portion will be in position to be folded down over the central sheet portion by the approaching pressing member.

It is preferred that the pressing members are segmented and preferably include a plurality of pressing member devices, which preferably have the form of rotary wheels, spaced apart from one another. Each pressing member device, such as each rotary wheel, is preferably carried by a dedicated lever. Then it is also preferred that the spaces between the fingers are sufficiently large to let the pressing member devices, e.g. the rotary wheels, pass between the fingers, so as to make it possible to maintain the fingers in an upright position during at least a part of, or even the entire, pressing step. Thereby, the narrow first lateral sheet portion and the upright wider lateral sheet portion will be attached to their intended exact positions on the central sheet portion.

In addition, it is preferred that the spaces between the pressing member devices, e.g. between the rotary wheels, are sufficiently large to let the rotary wheels of one pressing member pass between the rotary wheels of the other pressing member when they meet adjacent to the central portion of the fibrous sheet, said method further including, during the pressing step, moving the pressing member devices, e.g. the rotary wheels, of the pressing members on the folded fibrous sheet from a side edge of the central portion to at least the middle of the central portion.

Suitably, to increase the production rate, the method further includes providing a carriage for carrying the table, the folding mechanism, and the pressing mechanism; and continuously feeding a sequence of fibrous sheets through said carriage, and at the same time moving the pressing members back and forth so as to move together with each of the fibrous sheets while carrying out said folding and pressing. Then, it is also suitable to provide a conveyor for feeding the fibrous sheets.

Preferably, the fibrous sheet on one side has a foil cladding and on the opposite side on each side of the central portion has two lengthwise extending parallel grooves of perpendicularly at least partly V-shaped cross-section that are spaced apart from each other a distance equal to an intended thickness of the building element reduced by the double thickness of the cladding, and said grooves forming between them an inner part of each of the two lateral portions to permit the fibrous sheet to be folded 90 degrees two times to position an outer part of each of the two lateral portions on top of the central portion, preferably the first elongate portion after those two times of 90 degree folding forms at least a major portion of a first narrow face of the building element.

The folding step suitably includes folding the fibrous sheet in the groove that is closest to the central portion of the fibrous sheet to form a first 90 degree fold; and folding the fibrous sheet in the other groove to form a second 90 degree fold, whereby the outer part of the lateral portion of the fibrous sheet is placed on top of the first half, and preferably said first 90 degree fold is completed before the completion of said second 90 degree fold.

In another aspect, the object of the invention is achieved in that a device for producing a panel-shaped building element having two large faces by folding over and pressing a fibrous sheet including a central portion and two lateral portions parallel thereto and adapted to form at least a part of the large faces of the building element, all three portions extending the full length of the sheet, comprises:
- a table for receiving the fibrous sheet, said table including a central table portion and two lateral table portions parallel thereto and adapted to receive the central portion and two lateral portions, respectively, of the fibrous sheet,
- a plurality of fingers included in each of the two lateral table portions, each plurality of said fingers being movable as a single unit between a position no higher than in plane with the central table portion and a position where a main part of each finger is located above said plane;
- a first control arrangement arranged to move the fingers so as to fold the fibrous sheet such that each of the two lateral sheet portions forms a first 90 degree fold relative to the central portion;
- a pressing mechanism having two pressing members arranged on opposite sides of the central portion; and
- a second control arrangement arranged to move the pressing members to firstly fold down an outer part of the respective lateral sheet portions onto the central sheet portion, secondly to move on top of said outer parts of the lateral sheet portions and press onto the lateral sheet portions, in counter action with the table, towards the central sheet portion.

By such a device, the fibrous sheet can be folded over swiftly and carefully in a very effective manner to produce the panel-shaped building element. The fact that the pressing member is moved mainly in a horizontal plane and to a minor extent a short vertical distance instead of describing a loop around the fibrous sheet makes it possible to reduce the time necessary for carrying out the steps and thus makes it possible to increase the production rate.

Suitably, the fingers are pivotal, so that they can constitute the two lateral table portions and give the lateral portions of the fibrous sheet a maximum support during the folding from a lying position to an upright one.

Preferably, the fingers are spaced apart from one another and are of a length corresponding to at least 1/3, more preferably at least 40%, of the width of the lateral portion of the fibrous sheet, and the pressing member is segmented and includes pressing member devices, preferably in the form of a plurality of rotary wheels spaced apart from one another, each wheel preferably being carried by a dedicated lever. Then, it is suitable that the spaces between the fingers are sufficiently large to let the pressing member devices, e.g. the rotary wheels, pass between them. Thereby, the fingers can be maintained in an upright position during a part of, or even the entire, pressing step. Consequently, the narrow first lateral sheet portion and the upright sheet portions will be attached exactly to their intended positions on the central sheet portion.

Then, to ensure that the entire surface of the wider lateral sheet portions will be pressed against the central sheet portion with a desired uniform pressure, it is preferred that the spaces between the pressing member devices, e.g. the rotary wheels, are sufficiently large to let the pressing member devices of one pressing member pass between the pressing member devices of the other pressing member when they meet substantially in the middle of the central portion of the fibrous sheet, thereby enabling an overlapping meeting between the two pressing members.

A drive arrangement for moving the pressing members preferably includes one, or preferably at least two, parallel beams extending over the table, and trolley assemblies are carried by and travelling along said beams. Suitably, each trolley assembly includes a rotary shaft interconnecting each pair of two trolleys on the same side of the table, and said pressing member is mounted in a plurality of levers fixed to the shaft, so that a rotation of the shaft in one direction moves the pressing member downward to press against the fibrous sheet, and a rotation in the opposite direction lifts the pressing member up from the fibrous sheet. The rotation of the shaft is effected by the second control arrangement.

To use the invention in a production line, the device further suitably comprises a carriage for carrying said table, trolley assemblies with pressing members, and control arrangement. The carriage is adapted to be supported by an elongate support structure and be movable back and forth thereon, and it is also arranged to move together with each of the fibrous sheets while the folding and pressing is being carried out.

For continuously feeding a sequence of fibrous sheets through the device, a belt conveyor having a pervious belt is preferably provided, and the device preferably includes a suction member arranged to fix a portion of each fibrous sheet to the table.

The fibrous sheet to be folded over and pressed to form the, preferably low weight, panel-shaped building element may be of various types known to the skilled art worker. However, preferably, the fibrous sheet has a width, a length, and a thickness and on one side a foil cladding and on the on opposite side two lengthwise extending parallel grooves of perpendicularly V-shaped cross-section that are spaced apart from each other a distance equal to an intended thickness of the building element reduced by the double thickness of the fibrous sheet to form a first and a second half adapted to form the two large faces of the building element and permit the fibrous sheet to be bent 90 degrees two times to position the second half on top of the first one. The central portion of the fibrous sheet carries spacing elements for providing a desired thickness of the building element, and the spacing elements and/or the lateral portions carry an adhesive for fixing the lateral portions to the spacing elements in a finished building element. The adhesive may be applied at any time before the folding over of the second half, outside or inside of the device. Further, the pressing members have a length that is at least as long as the length of the fibrous sheet.

### BRIEF DESCRIPTION OF THE DRAWINGS

In the following, the invention will be described in more detail with reference to preferred embodiments and the appended drawings.
- Fig. 1: is an isometric view of part of a machine for producing panel-shaped building elements from fibrous sheets and including a folding over and pressing device of the invention with one finished building element leaving the machine.
- Fig. 2: is an end view of the machine of Fig. 1 at the start of the folding step and with spaced apart folding fingers and segmented pressing members in their starting positions.
- Fig. 3: is an end view similar to Fig. 2 but showing the two lateral portions of the fibrous sheet folded upward to an upright position by means of the pivotal fingers.
- Fig. 4: is an isometric view of what is shown in Fig. 3.
- Fig. 5: is an isometric view similar to Fig. 4, but showing the pressing members, which are segmented and include a plurality of spaced apart rotary wheels, moved to a position where they are ready to start folding down the upright lateral sheet portions onto the top of the central sheet portion.
- Fig. 6: is an end view of what is shown in Fig. 5.
- Fig. 7: is an isometric view similar to Fig. 5, but showing the pressing members after they have folded down the lateral sheet portions onto the top of the central sheet portion and have passed through the spaces between the fingers and started to roll on the building element toward its middle while pressing the lateral sheet portions against the central sheet portion.
- Fig. 8: is an end view of what is shown in Fig. 7.
- Fig. 9: is an end view similar to Fig. 6 but showing the end of the pressing step where the two pressing members have met at the middle of the central sheet portion and the wheels of one pressing member are passing through the spaces between the wheels of the other one.
- Fig.10: is an end view similar to Fig. 9 but showing the two pressing members lifted from the produced building element and ready to return to their starting positions.
- Fig.11: is an end view similar to Fig. 10 but showing the two pressing members returned to their starting positions while the fingers still have to be returned to their starting positions, and,
- Figs. 12a, 12b: show exemplary embodiments of building elements produced according to the invention.

### MODE(S) FOR CARRYING OUT THE INVENTION

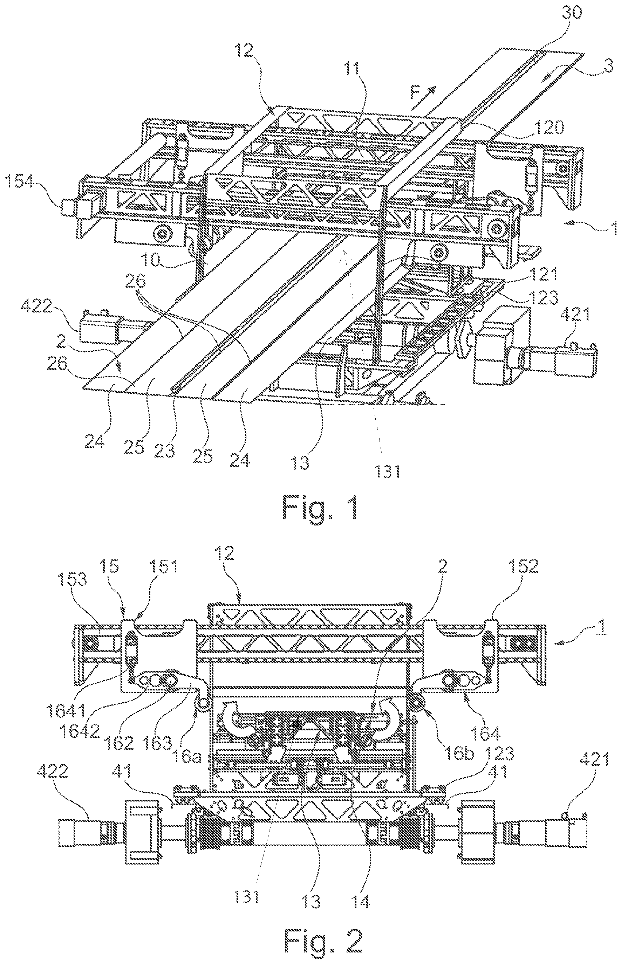

The machine shown in the drawings includes a folding and pressing device 1 for folding over and pressing a fibrous sheet 2 to form a low weight panel-shaped building element 3 having two large faces 30, one of which is shown facing upwards in Fig. 1. The folding and pressing device 1 has an inlet end 10 and an outlet end 11. A conveyor assembly, not shown in the drawings, transports the fibrous sheet 2 in a feeding direction F through the inlet end 10 into the pressing device 1, where the fibrous sheet 2 is being folded over and pressed, and discharges the produced building element 3 through the outlet end 11.

The fibrous sheet 2 to be folded over and pressed to form the low weight panel-shaped building element 3 may be of various types known to the skilled art worker. However, the fibrous sheet 2 has a width, a length, and a thickness. The sheet 2 may preferably originate from a rolled up store of sheet material or from a stack of flat sheets of material, e.g. made of board, having the desired width, wherein the length preferably is cut prior to the pressing device.

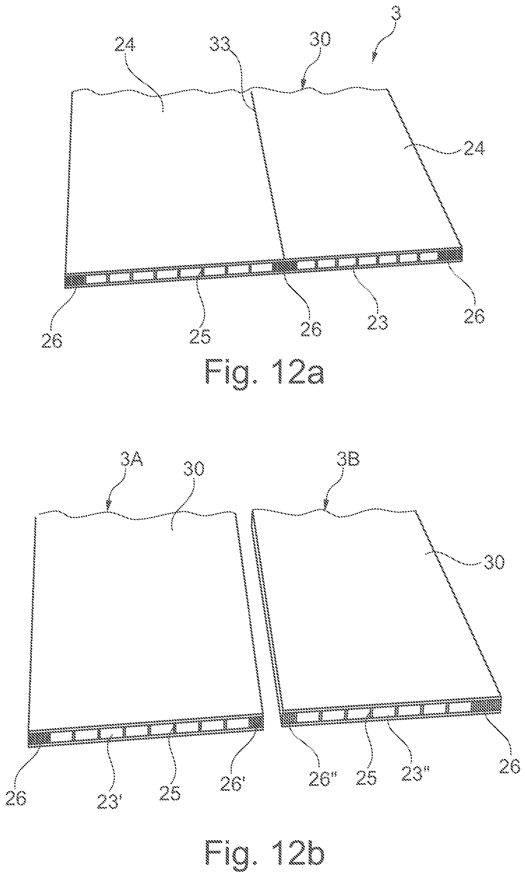

As also disclosed in WO 2017/007406 A1, see for example Figs. 12a and 12b of that document, and the description connected thereto, the fibrous sheet 2 suitably comprises a board sheet having on one side a foil cladding and on the opposite side two pairs of two lengthwise extending parallel grooves of perpendicularly V-shaped cross-section that are spaced apart from each other a distance equal to an intended thickness of the building element reduced by the double thickness of the cladding (if any) to form a central portion 23 and two lateral portions 24.

The central sheet portion 23 is defined between the two innermost grooves of each pair and is adapted to form one of the two large faces of the building element 3, while the two outer lateral sheet portions 24a located outside the outermost grooves of each pair together form the other large face. Thus, the width of the central portion 23 is about half the width of the fibrous sheet 2, while the width of each one of the two lateral sheet portions 24 is about a quarter of the width of the fibrous sheet 2. The outermost groove of each pair divides each lateral sheet portion 24 into an inner narrow lateral sheet portion 24b and an outer wider lateral sheet portion 24a. The grooves permit the lateral portions 24 of the fibrous sheet 2 to be bent 90 degrees two times to make each inner narrow lateral sheet portion 24b form a longitudinal narrow side face of the building element 3 while each outer wider lateral sheet portion 24a covers a half of the top of the central portion 23.

Further, the fibrous sheet 2 carries spacing elements 25, 26 for providing a desired thickness of the building element 3 that is produced by folding and pressing the fibrous sheet 2. In the preferred embodiment shown in the drawings, the spacing elements are carried by the central sheet portion 23, but alternatively they can be carried by the two lateral sheet portions 24 or be provided on all or some of the sheet portions 23, 24. The spacing elements 25, 26 suitably carry an adhesive for fixing the sheet portions 23, 24 to one another in a finished building element 3. As alternative to, or in combination with being applied on the spacing elements 25, 26, adhesive may also be applied on the sheet portion 24 to be attached to them. Hence, adhesive may be applied to the spacing elements 25, 26, and/or on the lateral sheet portions 24. The adhesive may be applied at any time before the folding over of the lateral sheet portions 24, outside or inside of the folding and pressing device 1 and at any or all of the parts 23, 24, 25, 26 that are to be joined by adhesive.

In a preferred embodiment, the fibrous board sheet has a thickness of about 1-3 mm, the spacing elements are board strips 25 which may be of the same thickness and have a height of about 10 to about 30 mm standing on their longitudinal edges parallel to the grooves, and laths 26 may be arranged for forming the longitudinal side edges of the building element 3. Furthermore (as also disclosed in WO 2017/007406 A1, see Fig. 13), in spaces between the other spacing elements, solid pad or block members of sufficient size may be arranged to permit attachment members, e.g. screws, to penetrate and be firmly anchored therein. In the present description, the term "spacing elements" is intended to include not only strips 25 and laths 26 but also such solid pads or block members although not shown in the drawings. By providing such solid pads or block members, the strength and stability of the produced building elements 3 can be increased and the mounting of them in installations by means of screws be more secure. If desired, it is of course possible to provide more laths 26 and/or pads/blocks and place them at other locations than shown in the drawings.

In the shown preferred embodiment, the spacing board strips 25 are straight, but as is evident for the skilled person, they may be of varying shape to fulfill their purpose, e.g. alternatively have a zigzag or wave shape or may be an interconnected structure, e.g. honeycomb structure. The described preferred fibrous sheet may contribute to a high production rate.

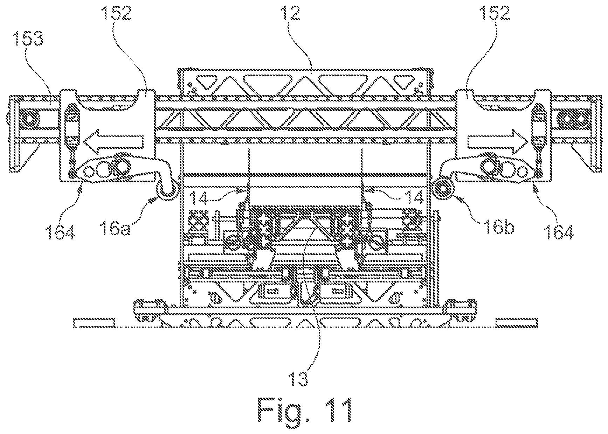

As disclosed in WO 2017/007406 A1, the grooves 22', 22" (see Fig. 12a of that document) may have a cross sectional shape of a "V" having a bottom angle of 90 degrees or alternatively in the general shape of an "X" (see Fig. 11b of WO 2017/007406 A1) having the same angle between the groove sides.

Returning to Fig. 1, the folding and pressing device 1 comprises a cage-like frame 12 carrying a table 13 for receiving the fibrous sheet 2. The table 13 includes a central table portion 131 and two lateral table portions, including (or in the form of) two folding units 14, parallel thereto, wherein the central table portion 131 is adapted to receive the central portion 23 of the fibrous sheet 2 and the two lateral table portions are adapted to receive the two lateral portions 24 of the fibrous sheet 2. Further, the folding units 14 preferably are segmented to provide passages, as will be explained further below. The passages are formed by providing each folding unit 14 with a plurality of fingers 140, i.e. included in each one of the two lateral table portions, wherein the fingers 140 are spaced apart from each other. The fingers 140 of each folding unit 14 are movable (preferably pivotable) as a single unit, around a pivot axis 142, between a position substantially in plane with the central table portion 131 and a position where a main part of each finger 140 is located above, and at an angle to, said plane. The fingers 140 may be spaced apart from one another like the teeth of a comb, thereby forming passages between adjacent fingers 140. Preferably the two folding units 14 are positioned off-set in relation to each other, to position their respective passages in an off-set relation to each other, as will be explained more in detail below. A first control arrangement 141, which may include electric, pneumatic or hydraulic actuators, is arranged to pivot the fingers 140 to fold the fibrous sheet 2 such that each of the two lateral sheet portions 24 forms a first 90-degree fold relative to the central portion 23. In the preferred embodiment shown in the drawings, the fingers 140 may constitute the two lateral table portions, without any further support surfaces, but it is evident for the skilled person that supplementing fixed support surface may be easily provided for between the fingers, in the same plane as the central table portion 131.

Further, the folding and pressing device 1 comprises a drive arrangement 15 including two trolley assemblies 151 movable towards and away from each other in a direction across the table 13. Each trolley assembly 151 includes two trolleys 152 located on the same side of the table 13, and further a pressing member 16a, 16b, preferably comprising rotary pressing member devices 161. Each pressing member 16a, 16b is supported by and extends between the two trolleys 152 of each trolley assembly 151. A second control arrangement 164 is arranged to move the pressing member 16a, 16b from a starting position outside of the table 13 to firstly contact and fold down the upright lateral sheet portions 24 onto the central sheet portion 23 to form a sandwich, secondly to press onto the lateral sheet portions 24 in counter action with the table 13 towards the central sheet portion 23 to convert the formed sandwich into the desired panel-shaped building element 3, and finally to return the pressing members 16a, 16b to the starting position.

By such a device, the fibrous sheet 2 can be folded over swiftly and carefully in an effective manner to produce the panel-shaped building element 3. The fact that the pressing member 16a, 16b is moved mainly in a horizontal plane and to a minor extent a short vertical distance makes it possible to reduce the time necessary for carrying out the steps of folding and pressing and thus makes it possible to increase the production rate.

Suitably, the fingers 140 are pivotal, so that they can be incorporated in the two lateral table portions and give the lateral portions 24 of the fibrous sheet 2 a maximum support during the folding from a lying position to an upright one. Thus, the fingers 140 when lying down suitably form part of the sheet carrying surface of the lateral table portions.

Preferably, the fingers 140 are spaced apart from one another and are preferably of a length that is less than the width of the lateral portion 24 of the fibrous sheet 2, preferably the length of the fingers 140 corresponds to at least 1/3 the width of the lateral portion 24 of the fibrous sheet 2, more preferred to at least 40% of the width of the lateral portion 24 of the fibrous sheet 2. The respective pressing member 16a, 16b is preferably segmented and includes a plurality of pressing member devices 161, preferably in the form of rotary wheels 161 spaced apart from one another. The wheels 161 are adapted for rolling over the lateral portion 24 as the pressing member 16a, 16b moves on top of the outer part 24a of the respective lateral sheet portion 24. Each wheel is carried by a dedicated lever 163. Then, it is suitable that the spaces between the fingers 140 are sufficiently wide to let the pressing member devices 161, e.g. the rotary wheels, pass through them. Thereby, the fingers 140 can be maintained in an upright position during the entire pressing step. Consequently, the inner narrow lateral sheet portions and the upright outer wider sheet portions will be attached exactly to their intended positions on the building element 3.

Then, to ensure that the entire surface of the outer lateral sheet portions will be pressed against the central sheet portion 23 with a desired pressure, it is preferred that the spaces between the pressing member devices 161 are sufficiently large to let the pressing member devices 161 of one pressing member 16a pass between the pressing member devices 161 of the other pressing member 16b when they meet, thereby enabling each one of the pressing members 16a, 16b to press along at least half of the fibrous sheet 2. Thus, the two pressing members 16a, 16b can pass into and through each other, whereby it is ensured that each half of the panel-shaped building element 3 will be pressed over its entire width. Further, since the pressing members 16a, 16b mainly move in the horizontal plane, it will be easy to control the movement during the pressing step.

The drive arrangement 15 for moving the pressing members 16a, 16b preferably includes two parallel beams 153 carried by the frame 12 and extending over the table 13, and the trolley assemblies151 are carried by and travelling along said beams 153. Suitably, each trolley assembly 151 includes a rotary shaft 162 interconnecting each pair of two trolleys 152 on the same side of the table 13, and said pressing member 16a, 16b is mounted in a plurality of levers 163 fixed to the rotary shaft 162, so that a rotation of the shaft 162 in one direction moves the press member 16a, 16b downward to press against the fibrous sheet 2, and a rotation in the opposite direction lifts the pressing member 16a, 16b up from the fibrous sheet 2. The rotation of the shaft 162 is effected by the second control arrangement 164, which may include at least one lever 1642 fixed to the rotary shaft 162 and at least one electric, pneumatic or hydraulic actuator 1641 for pivoting the lever 1642 to rotate the shaft 162.

To make it more efficient to include the folding and pressing device 1 in a production line, the frame 12 is designed to form a carriage for carrying the table 13, trolley assemblies 151 with pressing members 16, and control arrangements 141, 164, and is adapted to be supported by an elongate support structure and movable back and forth thereon. As best shown in Fig. 1, the support structure includes two parallel beams 41, preferably identical, on which the carriage 12 is movable back and forth driven by a drive mechanism. The drive mechanism has a motor 421 with an output shaft (not shown) and a person skilled in the art knows many mechanisms that can convert a rotation of the motor shaft to a reciprocating movement of the carriage 12. Fig. 1 also shows an embodiment where the drive mechanism also includes a second motor 422 for reciprocating the carriage 12.

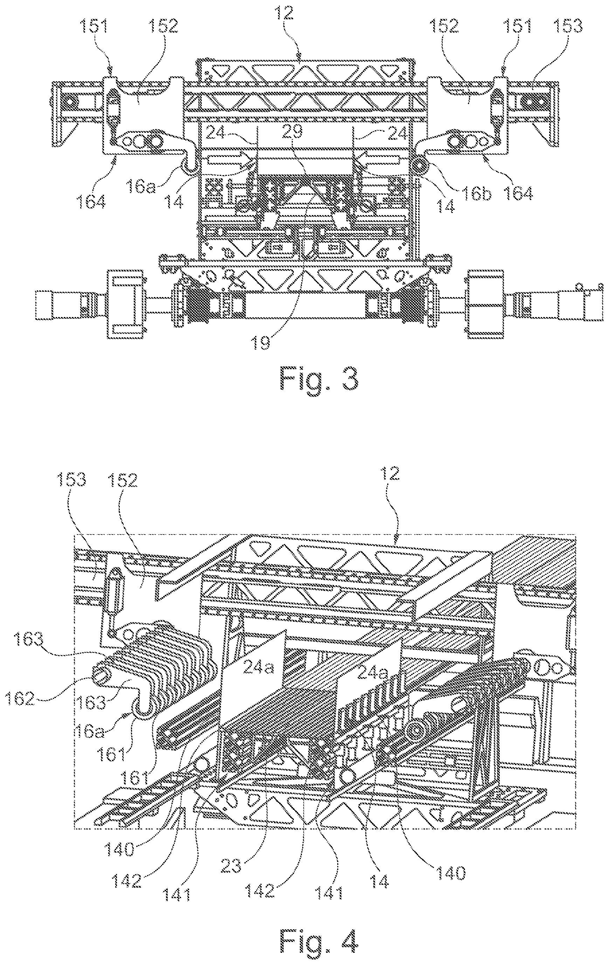

For continuously feeding a sequence of fibrous sheets 2 through the device 1, a conveyor assembly (not shown) may be provided. The conveyor assembly may be of various types known in the art, but preferably a belt conveyor having a pervious belt is provided for continuously feeding a sequence of fibrous sheets 2 through the folding and pressing device 1. Then, a suction member (not shown) is suitably provided for fixing a portion of each fibrous sheet 2 to the table 13 during the folding and pressing, and the folding and pressing device 1 is continuously reciprocating along the support structure to move together with each of the fibrous sheets 2 while carrying out said folding and pressing illustrated in Figs. 1-11. After such sequence of folding and pressing the carriage 12 returns to its upstream starting position and is ready to receive another fibrous sheet 2. Hereby the rate of production can be increased.

The fibrous sheet 2 to be folded over and pressed to form the preferably low weight, panel-shaped building element 3 may be of various types known to the skilled art worker. However, preferably, the fibrous sheet 2 has a width, a length, and a thickness and on one side a foil cladding (not shown) and on the opposite side with two pairs of lengthwise extending parallel grooves of perpendicularly V-shaped cross-section, one groove being an inner one and the other being an outer one, the two inner grooves forming between them a central sheet portion 23 adapted to form one of the two large faces 30 of the building element 3 and outside of them a lateral sheet portion 24 on each side. The grooves of each pair are spaced apart from each other a distance equal to an intended thickness of the building element 3 reduced by the double thickness of the cladding and defines a narrow inner lateral sheet portion adapted to form a narrow side of the building element 3. Each of the two lateral portions 24 further include an outer wider lateral portion 24a located outside of the outer groove, and the two outer lateral portions 24a are adapted to form the other large face 30 of the building element 3. The device 1 is arranged to fold the fibrous sheet 2 to position the outer lateral portions on top of the central portion 23, the central portion 23 carries spacing elements 25, 26 for providing a desired thickness of the building element 3, and said spacing elements 25, 26 and/or said lateral portions 24 carries an adhesive for fixing the lateral portions 24 to the spacing elements 25, 26, and the pressing members 16a, 16b have a length that is preferably at least as long as the length of the fibrous sheet 2.

In a few words:
Fig. 1 shows on the whole how the board sheet 2 with spacing elements 25, 26 is ready to be formed into a panel-shaped building element 3 by means of the folding and pressing device 1.
Figs. 2, 3 and 4 show that folding units 14 lift up the lateral portions 24 of the fibrous sheet 2, such that the lateral portions 24, including the outer parts 24a, are in their entirety upturned relative to the central portion 23.

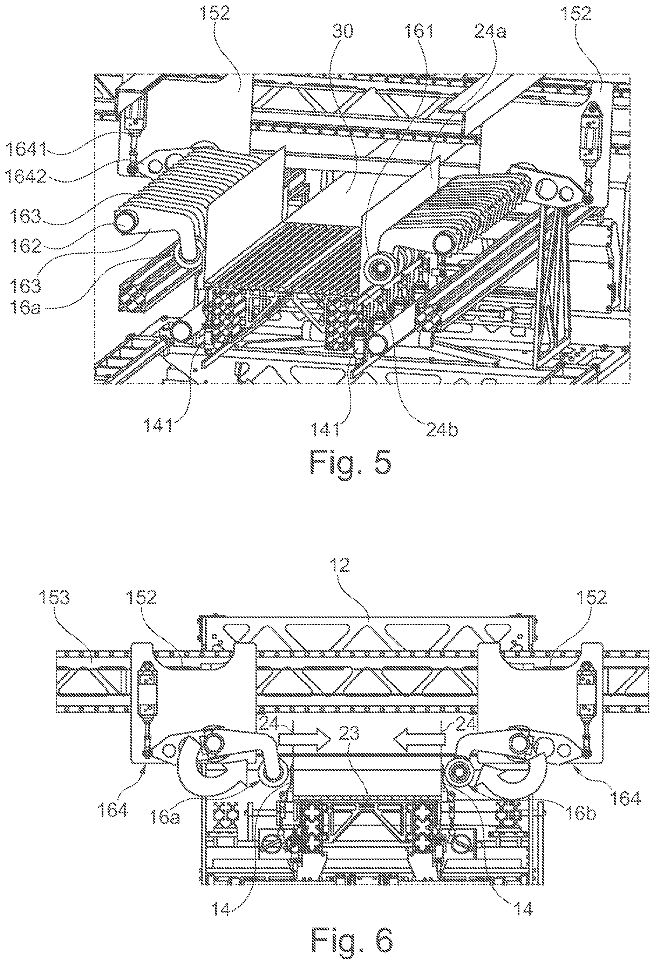

Figs. 5 and 6 show that the pressing members 16a, 16b move inward toward the center of the fibrous sheet 2.

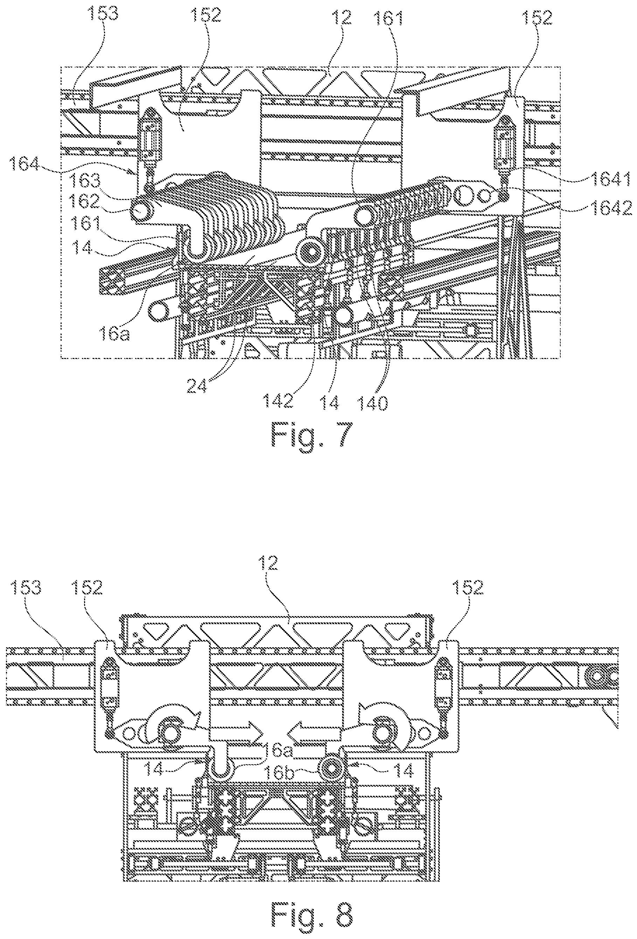

Figs. 7 and 8 show that the folding units 14 include fingers 140 that are spaced apart from one another, that the pressing members 16a, 16b, which are segmented, are being moved in a horizontal direction and through the spaces between the fingers 140, and that the pressing members 16a, 16b are pivotal to permit them to be folded down and press against the lateral portions 24.

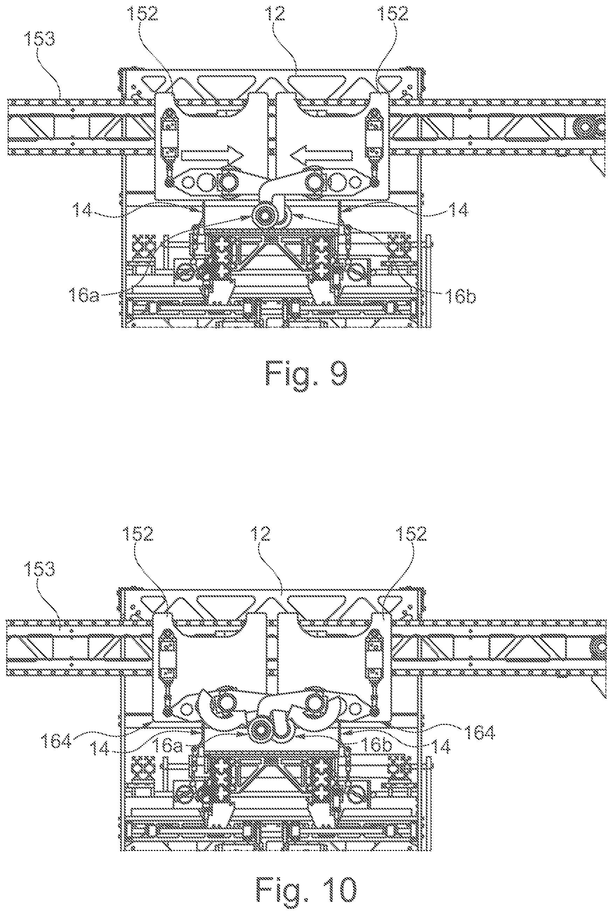

Figure 9 shows that the segmented pressing members 16a, 16b are being moved past each other. Hence, an overlapping meeting occurs between the member 16a and the member 16b. This ensures an efficient and even pressing of the entire surface of the lateral portions 24 toward the central portion 23.
Figs 10 and 11 show that the pressing members 16a, 16b are being returned to their start position.

To summarize, a method of and a device for folding over and pressing a fibrous sheet 2 to produce a panel-shaped building element 3 having two large faces 30 are disclosed. The device 1 comprises two pressing members 16a, 16b that move mainly horizontally over the fibrous sheet 2, which has a central portion 23 and two lateral portions 24, to first fold the two lateral portions 24 over the central portion 23 carrying the spacing elements 25, 26, and then press the formed sandwich 23, 24, 25, 26 to form the building element 3, as shown in Fig. 12a. Preferably, a sequence of fibrous sheets 2 is continuously fed through the device 1, and the device 1 continuously reciprocates to move together with each of the sheets 2 during the folding and pressing thereof.

As shown in Fig. 12b two building elements 3A, 3B may be produced by dividing a building element 3, e.g. as shown in Fig. 12a, lengthwise. Preferably this is achieved by cutting and/or sawing in the middle of a centrally positioned lath 26, that after division will form side laths 26', 26" in each one of the building elements 3A, 3B. Likewise the central portion 23 will form two separate faces 23', 23". Preferably the cut/division of the building element 3 into the two building elements 3A, 3B is made by sawing or cutting in the lengthwise joint 33 between the two "lateral portions" 24. The two side laths 26', 26" may preferably be used as back sides and/or non-visible sides in a piece of furniture made from the building elements 3A, 3B, as the sides of the laths 26', 26" lack foil cladding.

The present invention has been shown and described herein in what is considered to be one most practical and preferred embodiment. It is recognized, however, that departures may be made therefrom within the scope of the invention and that obvious modifications will occur to a person skilled in the art. For instance, it is evident for the skilled person that various kinds of pressing member devices 161 may be used to achieve a desired pressing together of the sheet portions 23, 24, e.g. sliding devices, caterpillar tread like devices. Further, it is evident that the pressing member devices 161 may be moved varying distances (not necessarily symmetric as shown in Fig. 9), e.g. to meet off-centered at the sheet portion 23 (e.g. to produce two building elements 3A, 3B that are of different width).

### INDUSTRIAL APPLICABILITY

The invention is applicable for producing panel-shaped building elements by folding and pressing fibrous sheets that are useful as walls and shelves in bookshelves, bookcases, storage compartments, and as table tops, for example.

## Claims

1. A method of folding over and pressing a fibrous sheet (2) to produce a panel-shaped building element (3) having two large faces (30), the method comprising:
- providing a fibrous sheet (2) having a width, a length, and a thickness and including a central portion (23) and two lateral portions (24) parallel thereto and adapted to form at least a part of the large faces (30) of the building element (3), all three portions (23, 24) extending the full length of the sheet (2), the central portion (23) carrying spacing elements (25, 26) for providing a desired thickness of the building element (3);
- providing an adhesive for adhering the two lateral portions (24) to the spacing elements (25, 26);
- providing a first folding mechanism (14) and operating it to fold the two lateral portions (24) of the fibrous sheet (2) upward such that they are in their entirety upturned relative to the central portion (23);
- providing a second folding mechanism in the form of a pressing mechanism having two pressing members (16a, 16b) and operating it to carry out the following steps:
- i) first folding down an outer part (24a) of each of the two upturned lateral portions (24) to place said outer parts (24a) of the lateral portions (24) on top of the central portion (23); and
- ii) then making the two pressing members (16a, 16b) move on top of said outer parts (24a) of the lateral portions (24) to press them against the spacing elements (25, 26) on the central portion (23) of the fibrous sheet (2) to become adhered thereto and to produce the building element (3) having two main faces (30) interconnected by the spacing elements (25, 26) and the adhesive.

2. A method as claimed in claim 1, further comprising:
- in the step of pressing the outer parts (24a) against the spacing elements (25, 26) on the central portion (23) moving said two pressing members (16a, 16b) from opposing positions towards each other in the same plane to make each respective pressing member (16a, 16b) press one of the outer parts (24a) towards the spacing elements (25, 26).

3. A method as claimed in claim 1 or 2, further comprising:
- providing a table (13) for receiving the fibrous sheet (2), said table (13) including a central table portion (131) and two lateral table portions parallel thereto and adapted to receive the central portion (23) and two lateral portions (24), respectively, of the fibrous sheet (2), a plurality of fingers (140) included in each one of said two lateral table portions, said fingers (140) being included in said folding mechanism (14) and spaced apart from one another and being pivotal between a lying position in plane with the central table portion (131) and an upright position; and
- pivoting, in said step of operating the folding mechanism (14), the fingers (140) between the lying position and the upright position to fold two lateral portions (24) of the fibrous sheet (2) upward such that they are upturned relative to the central sheet portion (23).

4. A method as claimed in claim 1, 2 or 3, wherein the pressing members (16a, 16b) are segmented and include a plurality of pressing member devices (161) spaced apart from one another, preferably each of the pressing member devices (161) being carried by a dedicated lever (163).

5. A method as claimed in claim 4 when combined with claim 3, wherein the spaces between the fingers (140) are sufficiently large to let the pressing member devices (161) pass between adjacent fingers (140), said method preferably further including maintaining the fingers (140) in an upright position during at least a part of the step of operating the pressing mechanism.

6. A method as claimed in claim 4 or 5, wherein the spaces between the pressing member devices (161) are sufficiently large to let the pressing member devices (161) of one pressing member (16a) pass between the pressing member devices (161) of the other pressing member (16b) when they meet, thereby allowing an overlapping meeting between the two pressing members (16a, 16b), preferably said method further including, during the step of operating the pressing mechanism, moving the pressing members (16a, 16b) on the folded fibrous sheet (2) from respective side edges of the central portion (23) to at least the middle of the central portion (23).

7. A method as claimed in any one of claims 3-6, wherein the fingers (140) constitute said two lateral table portions.

8. A method as claimed in any one of claims 1-7, further comprising:
- providing a carriage (12) for carrying the table (13), the folding mechanism (14), and the pressing members (16a, 16b); and
- continuously feeding a sequence of fibrous sheets (2) through said carriage (12), and at the same time moving the pressing members (16a, 16b) back and forth to move together with each of the fibrous sheets (2) while carrying out said folding and pressing.

9. A method according to any one of claims 1-8, further comprising cutting the formed building element (3) lengthwise into two halves, the cutting following essentially the position where the two outer parts (24a) of the lateral portions (24) meet each other at the upper large face (30).

10. A method according to any one of claims 1-9, wherein the fibrous sheet (2) on one side has a foil cladding and on the opposite side on each side of the central portion (23) has two lengthwise extending parallel grooves of perpendicularly at least partly V-shaped cross-section that are spaced apart from each other a distance equal to an intended thickness of the building element (3) reduced by the double thickness of the cladding, and said grooves forming between them an inner part of each of the two lateral portions (24) to permit the fibrous sheet (2) to be folded 90 degrees two times to position an outer part of each of the two lateral portions (24) on top of the central portion (23), the inner part of the lateral portion (24) after those two times folding forming a narrow face of the building element (3).

11. A device for folding over and pressing a fibrous sheet (2) to produce a panel-shaped building element (3) having two large faces (30), said fibrous sheet (2) including a central portion (23) and two lateral portions (24) parallel thereto and adapted to form at least a part of the large faces (30) of the building element (3), all three portions (23, 24) extending the full length of the sheet (2), said device being **characterized in** comprising:
- a table (13) for receiving the fibrous sheet (2), said table (13) including a central table portion (131) and two lateral table portions parallel thereto and adapted to receive the central portion (23) and two lateral portions (24), respectively, of the fibrous sheet (2),
- a plurality of fingers (140) included in each of the two lateral table portions, each plurality of said fingers (140) being movable between a position no higher than in plane with the central table portion (131) and a position where a main part of each finger (140) is located above said plane;
- a first control arrangement (141) arranged to move the fingers (140) so as to fold the fibrous sheet (2) such that each of the two lateral sheet portions (24) forms a first fold relative to the central sheet portion (23) and each of the lateral portions (24) being in its entirety upturned relative to the central sheet portion (23);
- a pressing mechanism having two pressing members (16a, 16b) arranged on opposite sides of the central portion (23); and
- a second control arrangement (164) arranged to move the pressing members (16a, 16b) to firstly fold down an outer part (24a) of the respective lateral sheet portions (24) onto the central sheet portion (23), secondly to move on top of said outer parts (24a) of the lateral sheet portions (24) and press onto the lateral sheet portions (24), in counter action with the table (13), towards the central sheet portion (23).

12. A device as claimed in claim 11, wherein the fingers (140) are pivotal.

13. A device as claimed in claim 11 or 12, wherein the fingers (140) are spaced apart from one another, preferably the length of the fingers (140) corresponds to at least 1/3 of the width of the lateral portion (24) of the fibrous sheet (23), more preferred corresponding to at least 40% of the width of the lateral portion (24) of the fibrous sheet (23), preferably the fingers (140) are of a length less than the width of the lateral portion (24) of the fibrous sheet (23).

14. A device as claimed in any one of claims 11-13, wherein the respective pressing member (16a, 16b) is segmented and includes a plurality of pressing member devices (161) spaced apart from one another, wherein preferably each pressing member device (161) being carried by a dedicated lever (162), preferably the respective pressing member device (161) has the form of a wheel (161) adapted for rolling over the lateral portion (24) as the pressing member (16a, 16b) moves on top of said outer part (24a) of the respective lateral sheet portion (24).

15. A device as claimed in claim 14, wherein the space between two adjacent fingers (140) is sufficiently large to let the pressing member device (161) pass between them.

16. A device as claimed in claim 14 or 15, wherein the spaces between the pressing member devices (161) are sufficiently large to let the pressing member devices (161) of one pressing member (16a) pass between the pressing member devices (161) of the other pressing member (16b), the pressing members (16a, 16b) thereby being adapted for allowing an overlapping meeting between the two pressing members (16a, 16b), preferably the device being adapted for allowing such an overlapping meeting adjacent to the middle of the central portion (23) of the fibrous sheet (2).

17. A device as claimed in any one of claims 11-16, wherein the fingers (140) constitute said two lateral table portions.

18. A device as claimed in any one of claims 11-17, wherein the device further comprises a drive arrangement (15) for moving the pressing members (16a, 16b), the drive arrangement (15) including two trolley assemblies (151) movable towards and away from each other in a direction across the table (13), preferably the drive arrangement (15) further including at least one beam (153) extending over the table (13), said trolley assemblies (151) being carried by and travelling along said beam (153), preferably said at least one beam including at least two parallel beams (153), each trolley assembly (151) including two trolleys (152) located on the same side of the table (13) and each trolley (152) being adapted to travel along a respective one of the beams (153).

19. A device as claimed in claim 18, wherein each trolley assembly (151) includes at least two trolleys (152) and a rotary shaft (162) interconnecting each pair of two trolleys (152) on the same side of the table (13), said pressing member (16a, 16b) being mounted in a plurality of levers (163) fixed to the shaft (162), so that a rotation of the shaft (162) in one direction moves the pressing member (16a, 16b) downward to press against the fibrous sheet (2), and a rotation in the opposite direction lifts the pressing member (16a, 16b) up from the fibrous sheet (2), and wherein further the rotation of the shaft (162) is effected by the second control arrangement (164).

20. A device as claimed in any one of claims 11-19, further comprising a carriage (12) for carrying said table (13), pressing members (16a, 16b), and control arrangements (141, 164), said carriage (12) being adapted to be supported by an elongate support structure and be movable back and forth thereon, the carriage (12) being arranged to move together with each of the fibrous sheets (2) while said folding and pressing are being carried out, preferably the carriage (12) being adapted to return to its original position after said folding and pressing to move together with a subsequent fibrous sheet (2).

21. A device as claimed in any of claims 11-20, wherein a belt conveyor having a pervious belt is provided for continuously feeding a sequence of fibrous sheets (2) through the device (1), and wherein the device (1) preferably includes a suction member arranged to fix a portion of each fibrous sheet (2) to the table (13).

22. A device as claimed in any of claims 11-21, wherein the device (1) is arranged to handle the fibrous sheet (2) having a width, a length, and a thickness and on one side is provided with a foil cladding and on the opposite side is provided with two pairs of lengthwise extending parallel grooves of perpendicularly V-shaped cross-section, one groove being an inner one and the other being an outer one, the two inner grooves forming between them a central sheet portion (23) adapted to form one of the two large faces (30) of the building element (3) and outside of them a lateral sheet portion (24) on each side, the grooves of each pair being spaced apart from each other a distance equal to an intended thickness of the building element (3) reduced by the double thickness of the cladding and defining a narrow inner lateral sheet portion adapted to form a narrow side of the building element (3), each of the two lateral portions (24) further including an outer lateral portion (24a) located outside of the outer groove, said two outer lateral portions (24a) being adapted to form the other large face (30) of the building element (3), said device being arranged to fold the fibrous sheet (2) to position the outer lateral portions (24a) on top of the central portion (23), the central portion (23) carrying spacing elements (25, 26) for providing a desired thickness of the building element (3), and said spacing elements (25, 26) and/or said lateral portions (24) carrying an adhesive for fixing the lateral portions (24) to the spacing elements (25, 26).

## Patentansprüche

1. Verfahren zum Umfalten und Pressen einer Faserbahn (2) zum Herstellen eines plattenförmigen Bauelements (3) mit zwei großen Flächen (30), wobei das Verfahren umfasst:
- Bereitstellen einer Faserbahn (2) mit einer Breite, einer Länge und einer Dicke und mit einem mittleren Abschnitt (23) und zwei dazu parallelen seitlichen Abschnitten, die geeignet sind, mindestens einen Teil der großen Flächen (30) des Bauelements (3) zu bilden, wobei sich alle drei Abschnitte (23, 24) über die gesamte Länge der Bahn (2) erstrecken, wobei der mittlere Abschnitt (23) Abstandselemente (25, 26) trägt, um eine gewünschten Dicke des Bauelements (3) zu erzeugen;
- Bereitstellen eines Klebstoffs zum Verkleben der beiden seitlichen Abschnitte (24) mit den Abstandselementen (25, 26);
- Bereitstellen eines ersten Faltmechanismus (14) und Betätigen desselben, um die beiden seitlichen Abschnitte (24) der Faserbahn (2) nach oben zu falten, so dass sie in ihrer Gesamtheit in Bezug auf den mittleren Abschnitt (23) umgedreht sind;
- Bereitstellen eines zweiten Faltmechanismus in Form eines Pressmechanismus mit zwei Presselementen (16a, 16b) und Betätigung desselben zur Durchführung der folgenden Schritte:
- i) zunächst nach unten Klappen eines äußeren Teils (24a) jedes der beiden umgedrehten Seitenabschnitte (24), um die äußeren Teile (24a) der seitlichen Abschnitte (24) oben auf dem mittleren Abschnitt (23) zu platzieren; und
- ii) anschließendes Bewegen der beiden Presselemente (16a, 16b) auf der Oberseite der äußeren Teile (24a) der seitlichen Abschnitte (24), um sie gegen die Abstandselemente (25, 26) auf dem mittleren Abschnitt (23) der Faserbahn (2) zu drücken um daran zu haften und das Bauelement (3) zu erzeugen, das zwei Hauptflächen (30) aufweist, die durch die Abstandselemente (25, 26) und den Klebstoff miteinander verbunden sind.

2. Verfahren nach Anspruch 1, ferner umfassend:
- in dem Schritt des Andrückens der äußeren Teile (24a) gegen die Abstandselemente (25, 26) auf dem mittleren Abschnitt (23), Bewegen der beiden Presselemente (16a, 16b) von gegenüberliegenden Positionen zueinander in der gleichen Ebene, um jedes jeweilige Presselement (16a, 16b) dazu zu bringen, eines der äußeren Teile (24a) gegen die Abstandselemente (25, 26) zu drücken.

3. Verfahren nach Anspruch 1 oder 2, ferner umfassend:
- Bereitstellen eines Tisches (13) zur Aufnahme der Faserbahn (2), wobei der Tisch (13) einen zentralen Tischabschnitt (131) aufweist und zwei seitliche Tischabschnitte parallel dazu, und geeignet, den mittleren Abschnitt (23) bzw. die beiden seitlichen Abschnitte (24) der Faserbahn (2) aufzunehmen, wobei eine Vielzahl von Fingern (140) in jedem der beiden seitlichen Tischabschnitte enthalten sind, wobei die Finger (140) in dem Faltmechanismus (14) enthalten sind und voneinander beabstandet sind und zwischen einer liegenden Position in einer Ebene mit dem mittleren Tischabschnitt (131) und einer aufrechten Position schwenkbar sind; und
- Schwenken der Finger (140) zwischen der liegenden Position und der aufrechten Position in dem Schritt des Betätigens des Faltmechanismus (14), um zwei seitliche Abschnitte (24) der Faserbahn (2) nach oben zu falten, so dass sie relativ zu dem mittleren Bahnabschnitt (23) umgedreht werden.

4. Verfahren nach Anspruch 1, 2 oder 3, wobei die Presselemente (16a, 16b) segmentiert sind und eine Vielzahl von Presselementvorrichtungen (161) umfassen, die voneinander beabstandet sind, wobei vorzugsweise jede der Presselementvorrichtungen (161) von einem eigenen Hebel (163) getragen wird.

5. Verfahren nach Anspruch 4 in Kombination mit Anspruch 3, wobei die Abstände zwischen den Fingern (140) ausreichend groß sind, damit die Presselemente (161) zwischen benachbarten Fingern (140) hindurchtreten können, wobei das Verfahren vorzugsweise umfasst, dass die Finger (140) während zumindest eines Teils des Schritts des Betreibens des Pressmechansmus in einer aufrechten Position gehalten werden.

6. Verfahren nach Anspruch 4 oder 5, wobei die Abstände zwischen den Presselementvorrichtungen (161) ausreichend groß sind, damit die Presselementvorrichtungen (161) eines Presselements (16a) zwischen den Presselementvorrichtungen (161) eines anderen Presselements (16b) hindurchgehen können, wenn sie sich treffen, wobei dadurch ein überlappendes Zusammentreffen zwischen den beiden Presselementen (16a, 16b) ermöglicht wird, wobei das Verfahren vorzugsweise weiterhin während des Schritts des Betreibens des Pressmechanismus das Bewegen der Presselemente (16a, 16b) auf der gefalteten Faserbahn (2) von jeweiligen Seitenkanten des mittleren Abschnitts (23) zu mindestens der Mitte des mittleren Abschnitts (23) umfasst.

7. Verfahren nach einem der Ansprüche 3 bis 6, wobei die Finger (140) die beiden seitlichen Tischabschnitte bilden.

8. Verfahren nach einem der Ansprüche 1-7, ferner umfassend:
- Bereitstellen eines Wagens (12) zum Tragen des Tisches (13), des Faltmechanismus (14) und der Presselemente (16a, 16b); und
- kontinuierliches Zuführen einer Folge von Faserbahnen (2) durch den Wagen (12) und gleichzeitiges Hin- und Herbewegen der Presselemente (16a, 16b), um sich zusammen mit jeder der Faserbahnen (2) zu bewegen, während sie das Falten und Pressen durchführen.

9. Verfahren nach einem der Ansprüche 1 bis 8, ferner umfassend das Schneiden des geformten Bauelements (3) in Längsrichtung in zwei Hälften, wobei das Schneiden im Wesentlichen der Stelle folgt, an der die beiden äußeren Teile (24a) der seitlichen Abschnitte (24) an der oberen grossen Fläche (30) zusammentreffen.

10. Verfahren nach einem der Ansprüche 1 bis 9, wobei die Faserbahn (2) auf einer Seite eine Folienummantelung aufweist und auf der gegenüberliegenden Seite auf jeder Seite des mittleren Abschnitts (23) zwei sich in Längsrichtung erstreckende parallele Nuten mit einem senkrecht dazu verlaufenden, zumindest teilweise V-förmigen Querschnitt aufweist, die in einem Abstand voneinander angeordnet sind, der der vorgesehenen Dicke des Bauelements (3) abzüglich der doppelten Dicke der Ummantelung, wobei die Nuten zwischen sich einen inneren Teil eines jeden der beiden seitlichen Abschnitte (24) bilden, um eine Faltung der Faserbahn (2) zweimal um 90 Grad zu ermöglichen, um einen äußeren Teil eines jeden der beiden seitlichen Abschnitte (24) oben auf dem mittleren Abschnitt (23) zu positionieren, wobei der innere Teil des seitlichen Abschnitts (24) nach diesen beiden Faltungen eine schmale Seite des Bauelements (3) bildet. 11.

11. Vorrichtung zum Falten und Pressen einer Faserbahn (2) zur Herstellung eines plattenförmigen Bauelements (3) mit zwei großen Flächen (30), wobei die Faserbahn (2) einen mittleren Abschnitt (23) und zwei dazu parallele seitliche Abschnitte (24) aufweist, die geeignet sind, zumindest einen Teil der großen Flächen (30) des Bauelements (3) zu bilden, wobei alle drei Abschnitte (23, 24) sich über die gesamte Länge der Bahn (2) erstrecken, wobei die Vorrichtung **dadurch gekennzeichnet ist, dass** sie umfasst:
einen Tisch (13) zur Aufnahme der Faserbahn (2), wobei der Tisch (13) einen mittleren Tischabschnitt (131) und zwei dazu parallele seitliche Tischabschnitte aufweist, die geeignet sind, den mittleren Abschnitt (23) und die beiden seitlichen Abschnitte (24) der Faserbahn (2) aufzunehmen,
eine Vielzahl von Fingern (140), die in jedem der beiden seitlichen Tischabschnitte enthalten sind, wobei jede Vielzahl der Finger (140) zwischen einer Position, die nicht höher als in einer Ebene mit dem mittleren Tischabschnitt (131) liegt, und einer Position, in der ein Hauptteil jedes Fingers (140) sich oberhalb der genannten Ebene befindet, bewegbar ist;
- eine erste Steueranordnung (141), die angeordnet ist, um die Finger (140) zu bewegen, um die Faserbahn (2) so zu falten, dass jeder der beiden seitlichen Bahnabschnitte (24) einen ersten Falz in Bezug auf den mittleren Bahnabschnitt (23) bildet und jeder der seitlichen Abschnitte (24) in seiner Gesamtheit in Bezug auf den mittleren Abschnitt (23) umgedreht ist;
- einen Pressmechanismus mit zwei Presselementen (16a, 16b), die auf gegenüberliegenden Seiten des mittleren Abschnitts (23) angeordnet sind; und
- eine zweite Steueranordnung (164), die so angeordnet ist, um die Presselemente (16a, 16b) zu bewegen, um zunächst einen äußeren Teil (24a) der jeweiligen seitlichen Bahnabschnitte (24) auf den mittleren Bahnabschnitt (23) zu falten, und dann, um sich auf die äußeren Teile (24a) der seitlichen Blattabschnitte (24) zu bewegen und auf die seitlichen Bahnabschnitte (24) gegen den Tisch (13) in Richtung des mittleren Bahnabschnitts (23) zu drücken.

12. Vorrichtung nach Anspruch 11, wobei die Finger (140) schwenkbar sind.

13. Vorrichtung nach Anspruch 11 oder 12, wobei die Finger (140) voneinander beabstandet sind, wobei vorzugsweise die Länge der Finger (140) mindestens 1/3 der Breite des seitlichen Abschnitts (24) der Faserbahn (23) entspricht, weiter bevorzugt mindestens 40% der Breite des seitlichen Abschnitts (24) der Faserbahn (23) entspricht, wobei vorzugsweise die Finger (140) von geringerer Länge als die Breite des seitlichen Abschnitts (24) der Faserbahn (23) sind.

14. Vorrichtung nach einem der Ansprüche 11-13, wobei das jeweilige Presselement (16a, 16b) segmentiert ist und eine Vielzahl von Presselementvorrichtungen (161) aufweist, die voneinander beabstandet sind, wobei vorzugsweise jede Presselementvorrichtung (161) von einem eigenen Hebel (162) getragen wird, wobei vorzugsweise die jeweilige Presselementvorrichtung (161) die Form eines Rades (161) hat, das geeignet ist, um über den seitlichen Abschnitt (24) zu rollen, wenn das Presselement (16a, 16b) oben auf dem äußeren Teil (24a) des jeweiligen seitlichen Bahnabschnitts (24) rollt.

15. Vorrichtung nach Anspruch 14, wobei der Abstand zwischen zwei benachbarten Fingern (140) ausreichend groß ist, damit die Presselementvorrichtung (161) zwischen ihnen hindurchtreten kann.

16. Vorrichtung nach Anspruch 14 oder 15, wobei die Abstände zwischen den Presselementvorrichtungen (161) ausreichend groß sind, um die Presselementvorrichtungen (161) des einen Presselements (16a) zwischen den Presselementvorrichtungen (161) des anderen Presselements (16b) passieren zu lassen, wobei die Presselemente (16a, 16b) ein überlappendes Zusammentreffen zwischen den beiden Presselementen (16a, 16b) ermöglichen, wobei die Vorrichtung vorzugsweise dazu geeignet ist, ein ein solches überlappendes Zusammentreffen in der Nähe der Mitte des mittleren Abschnitts (23) der Faserbahn (2) zu ermöglichen.

17. Vorrichtung nach einem der Ansprüche 11-16, wobei die Finger (140) die beiden seitlichen Tischabschnitte bilden.

18. Vorrichtung nach einem der Ansprüche 11-17, wobei die Vorrichtung ferner eine Antriebsanordnung (15) zum Bewegen der Presselemente (16a, 16b) aufweist, wobei die Antriebsanordnung (15) zwei Wagenanordnungen (151) umfasst, die aufeinander zu und voneinander weg in einer Richtung quer zu dem Tisch (13) bewegbar sind, wobei vorzugsweise die Antriebsanordnung (15) ferner mindestens einen sich über den Tisch (13) erstreckenden Träger (153) aufweist, wobei die Wagenanordnungen (151) von dem Träger (153) getragen werden und sich entlang dieses Trägers bewegen, wobei der mindestens eine Träger vorzugsweise mindestens zwei parallele Träger (153) umfasst, wobei jede Wagenanordnung (151) zwei Wagen (152) umfasst die sich auf derselben Seite des Tisches (13) befinden, wobei jeder Wagen (152) so ausgelegt ist, dass er sich entlang eines jeweiligen Trägers (153) bewegt.

19. Vorrichtung nach Anspruch 18, wobei jede Wagenanordnung (151) mindestens zwei Wagen (152) und eine Drehwelle (162) umfasst, die jedes Paar von zwei Wagen (152) auf derselben Seite des Tisches (13) verbindet, wobei das Presselement (16a, 16b) in einer Vielzahl von Hebeln (163) montiert ist, die an der Welle (162) befestigt sind, so dass eine Drehung der Welle (162) in einer Richtung das Presselement (16a, 16b) nach unten bewegt bewegt, um gegen die Faserbahn (2) zu drücken, und eine Drehung in der entgegengesetzten Richtung das Presselement (16a, 16b) von der Faserstoffbahn (2) abhebt, und wobei ferner die Drehung der Welle (162) durch die zweite Steueranordnung (164) bewirkt wird.

20. Vorrichtung nach einem der Ansprüche 11-19, ferner mit einem Schlitten (12) zum Tragen des Tisches (13), der Presselemente (16a, 16b) und der Steueranordnungen (141, 164), wobei der Schlitten (12) eingerichtet ist, um von einer länglichen Stützstruktur gestützt zu werden und auf dieser hin- und herbewegt zu werden, wobei der Schlitten (12) so angeordnet ist, dass er sich zusammen mit jeder der Faserbahnen (2) bewegt, während das Falten und Pressen ausgeführt wird, wobei der Schlitten (12) vorzugsweise geeignet ist, nach dem Falten und Pressen in seine ursprüngliche Position zurückzukehren, um sich zusammen mit einer nachfolgenden Faserbahn (2) zu bewegen.

21. Vorrichtung nach einem der Ansprüche 11-20, wobei ein Bandförderer mit einem durchlässigen Band zum kontinuierlichen Zuführen einer Folge von Faserbahnen (2) durch die Vorrichtung (1) vorgesehen ist, und wobei die Vorrichtung (1) vorzugsweise ein Saugelement aufweist, das so angeordnet ist, dass es einen Teil jeder Faserbahn (2) auf dem Tisch (13) fixiert.

22. Vorrichtung nach einem der Ansprüche 11-21, wobei die Vorrichtung (1) so angeordnet ist, dass sie die Faserbahn (2) handhaben kann, die eine Breite, eine Länge und eine Dicke aufweist und auf einer Seite mit einer Folienummantelung und auf der gegenüberliegenden Seite mit zwei Paaren von sich in Längsrichtung erstreckenden parallelen Nuten mit einem sich rechtwinklig dazu erstreckenden V-förmigem Querschnitt versehen ist, wobei eine Nut eine innere und die andere eine äußere ist, wobei die beiden inneren Nuten zwischen sich einen mittleren Bahnabschnitt (23) bilden, der geeignet ist, eine der beiden großen Flächen (30) des Bauelements (3) zu bilden, und ausserhalb davon einen seitlichen Bahnabschnitt (24) auf jeder Seite bilden, wobei die Nuten eines jeden Paares in einem Abstand voneinander angeordnet sind, der gleich der vorgesehenen Dicke des Bauelements (3) ist, reduziert um die doppelte Dicke der Verkleidung, und einen schmalen inneren seitlichen Bahnabschnitt festlegen, der geeignet ist, eine Schmalseite des Bauelements (3) zu bilden, wobei jeder der beiden seitlichen Abschnitte (24) einen äußeren seitlichen Abschnitt (24a) aufweist, der außerhalb der äußeren Nut angeordnet ist, wobei die beiden äußeren seitlichen Abschnitte (24a) die andere große Seite (30) des Bauelements (3) bilden, wobei die Vorrichtung so angeordnet ist, um die Faserbahn (2) zu falten, um die äußeren seitlichen Abschnitte (24a) auf dem mittleren Abschnitt (23) zu positionieren, wobei der mittlere Abschnitt (23) Abstandselemente (25, 26) trägt, um eine gewünschte Dicke des Bauelements (3) zu schaffen, und die Abstandselemente (25, 26) und/oder die seitlichen Abschnitte (24) einen Klebstoff zum Befestigen der seitlichen Abschnitte (24) an den Abstandselementen (25, 26) tragen.

## Revendications

1. Procédé pour replier et presser une feuille fibreuse (2) pour produire un élément de construction en forme de panneau (3) comportant deux grandes faces (30), le procédé comprenant les étapes consistant à :
- utiliser une feuille fibreuse (2) ayant une largeur, une longueur et une épaisseur et comprenant une partie centrale (23) et deux parties latérales (24) parallèles à cette dernière et conçues pour former au moins une partie des grandes faces (30) de l'élément de construction (3), les trois parties (23, 24) s'étendant sur toute la longueur de la feuille (2), la partie centrale (23) portant des éléments d'espacement (25, 26) destinés à fournir une épaisseur souhaitée de l'élément de construction (3) ;
- utiliser un adhésif pour coller les deux parties latérales (24) aux éléments d'espacement (25, 26) ;
- utiliser un premier mécanisme de pliage (14) et le mettre en œuvre pour plier les deux parties latérales (24) de la feuille fibreuse (2) vers le haut de sorte qu'elles soient entièrement tournées vers le haut par rapport à la partie centrale (23) ;
- utiliser un second mécanisme de pliage sous la forme d'un mécanisme de pressage comportant deux éléments de pressage (16a, 16b) et le mettre en œuvre pour exécuter les étapes suivantes consistant à :
- i) plier d'abord vers le bas une partie extérieure (24a) de chacune des deux parties latérales tournées vers le haut (24) pour placer lesdites parties extérieures (24a) des parties latérales (24) au-dessus de la partie centrale (23) ; et
- ii) amener ensuite les deux éléments de pressage (16a, 16b) à se déplacer au-dessus desdites parties extérieures (24a) des parties latérales (24) pour les presser contre les éléments d'espacement (25, 26) sur la partie centrale (23) de la feuille fibreuse (2) de sorte qu'elles y adhèrent et pour produire l'élément de construction (3) dont les deux faces principales (30) sont reliées mutuellement par les éléments d'espacement (25, 26) et par l'adhésif.

2. Procédé selon la revendication 1, consistant en outre :
- à l'étape de pressage des parties extérieures (24a) contre les éléments d'espacement (25, 26) sur la partie centrale (23), à déplacer lesdits deux éléments de pressage (16a, 16b) à partir de positions opposées en direction l'un de l'autre dans le même plan pour amener chaque élément de pressage respectif (16a, 16b) à presser l'une des parties extérieures (24a) en direction des éléments d'espacement (25, 26).

3. Procédé selon la revendication 1 ou la revendication 2, comprenant en outre les étapes consistant à :
- utiliser une table (13) pour recevoir la feuille fibreuse (2), ladite table (13) comprenant une partie de table centrale (131) et deux parties de table latérales parallèles à cette dernière et conçues pour recevoir respectivement la partie centrale (23) et deux parties latérales (24) de la feuille fibreuse (2), une pluralité de doigts (140) compris dans chaque partie desdites deux parties de table latérales, lesdits doigts (140) étant compris dans ledit mécanisme de pliage (14) et étant espacés les uns des autres et pouvant pivoter entre une position couchée dans un plan avec la partie de table centrale (131) et une position verticale ; et
- pivoter, à ladite étape de mise en œuvre du mécanisme de pliage (14), les doigts (140) entre la position couchée et la position verticale pour plier deux parties latérales (24) de la feuille fibreuse (2) vers le haut de sorte qu'elles soient tournées vers le haut par rapport à la partie de feuille centrale (23)

4. Procédé selon la revendication 1, 2 ou 3, dans lequel les éléments de pressage (16a, 16b) sont segmentés et comprennent une pluralité de dispositifs d'élément de pressage (161) espacés les uns des autres, chacun des dispositifs d'élément de pressage (161) étant de préférence supporté par un levier dédié (163).

5. Procédé selon la revendication 4 lorsque combinée avec la revendication 3, dans lequel les espaces séparant les doigts (140) sont suffisamment grands pour laisser passer les dispositifs d'élément de pressage (161) entre des doigts adjacents (140), ledit procédé comprenant de préférence en outre une étape consistant à maintenir les doigts (140) dans une position verticale pendant au moins une partie de l'étape de mise en œuvre du mécanisme de pressage.

6. Procédé selon la revendication 4 ou la revendication 5, dans lequel les espaces séparant les dispositifs d'élément de pressage (161) sont suffisamment grands pour laisser passer les dispositifs d'élément de pressage (161) d'un élément de pressage (16a) entre les dispositifs d'élément de pressage (161) de l'autre élément de pressage (16b) lorsqu'ils se rencontrent, permettant ainsi une rencontre à chevauchement entre les deux éléments de pressage (16a, 16b), ledit procédé consistant en outre de préférence, pendant l'étape de mise en œuvre du mécanisme de pressage, à déplacer les éléments de pressage (16a, 16b) sur la feuille fibreuse pliée (2) à partir de bords latéraux respectifs de la partie centrale (23) jusqu'au milieu de la partie centrale (23).

7. Procédé selon l'une quelconque des revendications 3 à 6, dans lequel les doigts (140) constituent lesdites deux parties de table latérales.

8. Procédé selon l'une quelconque des revendications 1 à 7, comprenant en outre les étapes consistant à :
- utiliser un chariot (12) pour supporter la table (13), le mécanisme de pliage (14) et les éléments de pressage (16a, 16b) ; et
- avancer en continu une série de feuilles fibreuses (2) par l'intermédiaire dudit chariot (12), et déplacer, au même moment, les éléments de pressage (16a, 16b) d'arrière en avant pour qu'ils se déplacent conjointement avec chacune des feuilles fibreuses (2) tout en exécutant ladite étape de pliage et de pressage.

9. Procédé selon l'une quelconque des revendications 1 à 8, comprenant en outre l'étape consistant à couper l'élément de construction formé (3) dans le sens de la longueur en deux moitiés, la coupe suivant sensiblement la position au niveau de laquelle les deux parties extérieures (24a) des parties latérales (24) se rencontrent au niveau de la grande face supérieure (30).

10. Procédé selon l'une quelconque des revendications 1 à 9, dans lequel la feuille fibreuse (2) comporte, d'un côté, un revêtement de feuille et, du côté opposé de chaque côté de la partie centrale (23), deux rainures parallèles s'étendant dans le sens de la longueur de section transversale au moins partiellement perpendiculairement en forme de V qui sont espacées l'une de l'autre d'une distance égale à une épaisseur souhaitée de l'élément de construction (3) diminuée du double de l'épaisseur du revêtement, et lesdites rainures formant entre elles une partie intérieure de chacune des deux parties latérales (24) pour permettre de plier deux fois la feuille fibreuse (2) de 90 degrés de façon à positionner une partie extérieure de chacune des deux parties latérales (24) au-dessus de la partie centrale (23), la partie intérieure de la partie latérale (24) après ces deux étapes de pliage formant une face étroite de l'élément de construction (3).

11. Dispositif pour replier et presser une feuille fibreuse (2) pour produire un élément de construction en forme de panneau (3) comportant deux grandes faces (30), ladite feuille fibreuse (2) comprenant une partie centrale (23) et deux parties latérales (24) parallèles à cette dernière et conçues pour former au moins une partie des grandes faces (30) de l'élément de construction (3), les trois parties (23, 24) s'étendant sur toute la longueur de la feuille (2), ledit dispositif étant **caractérisé en ce qu'**il comprend :
- une table (13) pour recevoir la feuille fibreuse (2), ladite table (13) comprenant une partie de table centrale (131) et deux parties de table latérales parallèles à cette dernière et conçues pour recevoir respectivement la partie centrale (23) et deux parties latérales (24) de la feuille fibreuse (2),
- une pluralité de doigts (140) compris dans chacune des deux parties de table latérales, chaque doigt de la pluralité desdits doigts (140) étant mobile entre une position qui n'est pas plus haute que dans le plan avec la partie de table centrale (131) et une position au niveau de laquelle une partie principale de chaque doigt (140) est située au-dessus dudit plan ;
- un premier agencement de commande (141) conçu pour déplacer les doigts (140) de façon à plier la feuille fibreuse (2) de sorte que chacune des deux parties de feuille latérales (24) forme un premier pli par rapport à la partie de feuille centrale (23) et que chacune des parties latérales (24) soit tournée vers le haut dans sa totalité par rapport à la partie de feuille centrale (23) ;
- un mécanisme de pressage comportant deux éléments de pressage (16a, 16b) disposés des côtés opposés de la partie centrale (23) ; et
- un second agencement de commande (164) conçu pour déplacer les éléments de pressage (16a, 16b) pour d'abord plier vers le bas une partie extérieure (24a) des parties de feuille latérales respectives (24) sur la partie de feuille centrale (23), pour les amener ensuite au-dessus desdites parties extérieures (24a) des parties de feuille latérales (24) et pour les presser sur les parties de feuille latérales (24), en utilisant une contre-réaction de la table (13), en direction de la partie de feuille centrale (23).

12. Dispositif selon la revendication 11, dans lequel les doigts (140) sont pivotants.

13. Dispositif selon la revendication 11 ou la revendication 12, dans lequel les doigts (140) sont espacés les uns des autres, la longueur des doigts (140) correspond de préférence à au moins un 1/3 de la largeur de la partie latérale (24) de la feuille fibreuse (23), on préfère davantage qu'elle corresponde à au moins 40 % de la largeur de la partie latérale (24) de la feuille fibreuse (23), les doigts (140) ayant idéalement une longueur inférieure à la largeur de la partie latérale (24) de la feuille fibreuse (23) .

14. Dispositif selon l'une quelconque des revendications 11 à 13, dans lequel l'élément de pressage respectif (16a, 16b) est segmenté et comprend une pluralité de dispositifs d'élément de pressage (161) espacés les uns des autres, dans lequel chaque dispositif d'élément de pressage (161) est de préférence supporté par un levier dédié (162), le dispositif d'élément de pressage respectif (161) a de préférence la forme d'une roue (161) conçue pour rouler sur la partie latérale (24) à mesure que l'élément de pressage (16a, 16b) se déplace au-dessus de ladite partie extérieure (24a) de la partie de feuille latérale respective (24).

15. Dispositif selon la revendication 14, dans lequel l'espace entre deux doigts adjacents (140) est suffisamment grand pour laisser passer le dispositif d'élément de pressage (161) entre eux.

16. Dispositif selon la revendication 14 ou la revendication 15, dans lequel les espaces entre les dispositifs d'élément de pressage (161) sont suffisamment grands pour laisser passer les dispositifs d'élément de pressage (161) d'un élément de pressage (16a) entre les dispositifs d'élément de pressage (161) de l'autre élément de pressage (16b), les éléments de pressage (16a, 16b) étant ainsi conçus pour permettre une rencontre à chevauchement entre les deux éléments de pressage (16a, 16b), le dispositif étant de préférence conçu pour permettre cette rencontre à chevauchement au voisinage du milieu de la partie centrale (23) de la feuille fibreuse (2) .

17. Dispositif selon l'une quelconque des revendications 11 à 16, dans lequel les doigts (140) constituent lesdites deux parties de table latérales.

18. Dispositif selon l'une quelconque des revendications 11 à 17, dans lequel le dispositif comprend en outre un agencement d'entraînement (15) destiné à déplacer les éléments de pressage (16a, 16b), l'agencement d'entraînement (15) comprenant deux ensembles chariots de roulement (151) mobile en s'approchant et en s'éloignant l'un de l'autre dans une direction traversant la table (13), l'agencement d'entraînement (15) comprenant de préférence en outre au moins une poutre (153) s'étendant sur la table (13), lesdits ensembles chariots de roulement (151) étant supportés par ladite poutre (153) et se déplaçant le long de cette dernière, ladite au moins une poutre comprenant de préférence au moins deux poutres parallèles (153), chaque ensemble chariot de roulement (151) comprenant deux chariots de roulement (152) situés du même côté de la table (13) et chaque chariot de roulement (152) étant conçu pour se déplacer le long de l'une respective des poutres (153).

19. Dispositif selon la revendication 18, dans lequel chaque ensemble chariot de roulement (151) comprend au moins deux chariots de roulement (152) et un arbre rotatif (162) reliant mutuellement chaque paire de deux chariots de roulement (152) du même côté de la table (13), ledit élément de pressage (16a, 16b) étant monté dans une pluralité de leviers (163) fixés à l'arbre (162), de sorte qu'une rotation de l'arbre (162) dans un sens déplace l'élément de pressage (16a, 16b) vers le bas pour un pressage de la feuille fibreuse (2), et une rotation dans le sens contraire élève l'élément de pressage (16a, 16b) vers le haut par rapport à la feuille fibreuse (2), et dans lequel la rotation de l'arbre (162) est en outre effectuée par le second agencement de commande (164).

20. Dispositif selon l'une quelconque des revendications 11 à 19, comprenant en outre un chariot (12) destiné à supporter ladite table (13), lesdits éléments de pressage (16a, 16b) et lesdits agencements de commande (141, 164), ledit chariot (12) étant conçu pour être supporté par une structure de support allongée et pour pouvoir être déplacé d'arrière en avant sur cette dernière, le chariot (12) étant conçu pour se déplacer conjointement avec chacune des feuilles fibreuses (2) lors de l'exécution de ladite étape de pliage et de pressage, le chariot (12) étant de préférence conçu pour revenir à sa position d'origine après ladite étape de pliage et de pressage pour se déplacer conjointement avec une feuille fibreuse suivante (2).

21. Dispositif selon l'une quelconque des revendications 11 à 20, dans lequel un convoyeur à bande comportant une bande perméable est prévu pour avancer en continu une série de feuilles fibreuses (2) à travers le dispositif (1), et dans lequel le dispositif (1) comprend de préférence un élément d'aspiration conçu pour fixer une partie de chaque feuille fibreuse (2) à la table (13).

22. Dispositif selon l'une quelconque des revendications 11 à 21, dans lequel le dispositif (1) est conçu pour manipuler la feuille fibreuse (2) ayant une largeur, une longueur et une épaisseur et est pourvu, d'un côté, d'un revêtement de feuille et, du côté opposé, de deux paires de rainures parallèles s'étendant dans le sens de la longueur de section transversale perpendiculairement en forme de V, une rainure étant une rainure intérieure et l'autre rainure étant une rainure extérieure, les deux rainures intérieures formant entre elles une partie de feuille centrale (23) conçue pour former l'une des deux grandes faces (30) de l'élément de construction (3) et, à l'extérieur de ces dernières, une partie de feuille latérale (24) de chaque côté, les rainures de chaque paire étant espacées l'une de l'autre d'une distance égale à une épaisseur souhaitée de l'élément de construction (3) diminuée du double de l'épaisseur du revêtement et définissant une partie de feuille latérale intérieure étroite conçue pour former un côté étroit de l'élément de construction (3), chacune des deux parties latérales (24) comprenant en outre une partie latérale extérieure (24a) située à l'extérieur de la rainure extérieure, lesdites deux parties latérales extérieures (24a) étant conçues pour former l'autre grande face (30) de l'élément de construction (3), ledit dispositif étant conçu pour plier la feuille fibreuse (2) de façon à positionner les parties latérales extérieures (24a) au-dessus de la partie centrale (23), la partie centrale (23) supportant des éléments d'espacement (25, 26) destinés à fournir une épaisseur souhaitée de l'élément de construction (3), et lesdits éléments d'espacement (25, 26) et/ou lesdites parties latérales (24) portant un adhésif permettant de fixer les parties latérales (24) aux éléments d'espacement (25, 26).
